# EUROPÄISCHE PATENTSCHRIFT

(11) **EP 3 538 293 B1**
(45) Veröffentlichungstag und Bekanntmachung des Hinweises auf die Patenterteilung: **13.07.2022**
(21) Anmeldenummer: 17793939.4
(22) Anmeldetag: 03.11.2017
(51) Int. Cl.: B22F 12/41, B22F 10/28, B33Y 50/02, B33Y 10/00, B22F 12/45, B22F 10/366, B29C 64/277, B29C 64/153

(54) **VERFAHREN ZUR SCHICHTWEISEN ADDITIVEN FERTIGUNG VON BAUTEILEN UND ZUGEHÖRIGES COMPUTERPROGRAMMPRODUKT**
ADDITIVE MANUFACTURING METHOD OF LAYERED PRODUCTS AND CORRESPONDING COMPUTER PROGRAM
PROCÉDÉ DE FABRICATION ADDITIVE DES PRODUITS EN COUCHE ET LOGICIEL CORRESPONDANT

(30) Priorität: 14.11.2016 DE 102016222261
(43) Veröffentlichungstag der Anmeldung: 18.09.2019
(73) Patentinhaber: Trumpf Laser- und Systemtechnik GmbH, 71254 Ditzingen (DE)
(72) Erfinder: HUBER, Uwe, 74379 Ingersheim (DE); BAUER, Johannes, 75428 Illingen (DE); THIELMANN, Michael, 71665 Vaihingen an der Enz (DE); WAGNER, Joachim, 70176 Stuttgart (DE); ALLENBERG-RABE, Matthias, 70499 Stuttgart (DE); ORTMANN, Jürgen, 57439 Attendorn (DE); BREITLING, Detlef, 71229 Leonberg (DE); BUCHBINDER, Damien, 12487 Berlin (DE); KRIST, Florian, 70190 Stuttgart (DE)
(74) Vertreter: Kohler Schmid Möbus Patentanwälte
(86) Internationale Anmeldenummer: PCT/EP2017/078118
(87) Internationale Veröffentlichungsnummer: WO 2018/086991

(56) Entgegenhaltungen:
- WO-A1-2015/191257
- WO-A1-2016/077250
- DE-A1- 19 818 469
- DE-A1- 19 953 000
- DE-A1-102015 103 127
- US-A1- 2012 237 745
- US-A1- 2013 112 672
- US-A1- 2016 318 129

## Beschreibung

Die Erfindung betrifft ein Laser Metal Fusion (LMF)- oder Selective Laser Sintering (SLS)-Verfahren zum schichtweisen additiven Fertigen von Bauteilen gemäß Oberbegriff von Anspruch 1, sowie auch ein zugehöriges Computerprogrammprodukt.

Ein derartiges Verfahren ist beispielsweise durch die US 2016/0318129 A1 bekannt geworden.

In Maschinen zur schichtweisen additiven Fertigung von Bauteilen werden Materialien verarbeitet, indem in einer Prozesskammer eine Pulverschicht (Metall, Keramik, Thermoplaste) auf eine Substratplatte aufgebracht und mit einem Laserstrahl verfestigt wird. Die Materialien können reaktiv sein, wie bspw. Titan oder Aluminium, die in Kontakt mit Sauerstoff schnell oxidieren, oder vergleichsweise inert sein, wie z.B. Edelstahl. Wird die Pulverschicht mit dem Laserstrahl geschmolzen, spricht man von Laser Metal Fusion (LMF) oder Selective Laser Melting (SLM). Wird die Pulverschicht mit dem Laserstrahl nur gesintert, spricht man von Selective Laser Sintering (SLS). Anschließend wird die Substratplatte um eine Pulverschichtdicke abgesenkt und eine neue Pulverschicht aufgebracht und erneut verfestigt, bis ein 3-dimensionales Bauteil gefertigt wurde. Üblicherweise werden mehrere Laserstrahlen mit zugehörigen Scannern eingesetzt, um den möglichen Bauraum, der sonst bei einem einzigen Scanner durch dessen Scanbereich eingeschränkt wäre, in X und Y zu vergrößern, wobei sich überlappende Arbeitsbereiche der Scanner nicht ausgeschlossen sind (z.B. DE 10 2005 014 483 A1). Nach der EP 2 875 897 A1 wird das Aufschmelzen der (Oberflächen)Kontur des Bauteils im Überlappbereich der Arbeitsbereiche zweier Laserstrahlen von dem einen Laserstrahl begonnen und dann von dem anderen Scanner fortgesetzt.

Außerdem ist bei Verfahren zum additiven Fertigen noch die sogenannte Hülle-Kern-Strategie bekannt, bei der mit einem ersten Laserstrahl mit kleinem Fokusdurchmesser (bspw. <100µm) die (filigrane) Kontur eines Bauteils ("Hülle") aufgeschmolzen und mit mindestens einem zweiten Laserstrahl der innenliegende Bereich des Bauteils ("Kern") auf Grund eines größeren Fokusdurchmessers (bspw. >500µm) und damit einhergehend vergrößerter Laserenergie beschleunigt gegenüber dem ersten Laserstrahl aufgeschmolzen. Optional wird der Bereich des Kerns nicht nach jeder Pulverlage aufgeschmolzen, sondern es werden mit dem zweiten Laserstrahl zwei oder mehr Pulverlagen auf einmal aufgeschmolzen. Nach der DE 198 18 469 A1 kann der Durchmesser des ersten Laserstrahls 0,01 bis 1,0 mm, insbesondere 0,1 bis 0,3 mm, und der Durchmesser des zweiten Laserstrahls 0,3 bis 50 mm, insbesondere 2 bis 10 mm, sein.

Die eingangs genannte US 2016/318129 A1 offenbart das additive Fertigen eines Bauteils mittels eines ersten fokussierten Laserstrahls mit einem ersten Durchmesser zwischen ca. 30 µm und ca. 200 µm und eines zweiten fokussierten Laserstrahls mit einem zweiten Durchmesser zwischen ca. 30 µm und ca. 50 µm und somit zwei gleich große oder zwei unterschiedlich große Laserstrahlen. Wenn, wie üblich, der erste Laserstrahl größer ist als der zweite Laserstrahl, können der größere erste Laserstrahl größere Regionen und der zweite Laserstrahl filigranere Merkmale fertigen. Im Falle unterschiedlich großer Laserstrahlen wird jede Oberflächenkontur ausschließlich vom kleineren der Laserstrahlen gefertigt.

DE 10 2015 103127 A1 beschreibt das additive Fertigen eines Bauteils mittels zweier Laserstrahlen unterschiedlicher Strahlgüte, wobei die beiden Laserstrahlen zeitgleich oder sequentiell mittels einer gemeinsamen Scanneroptik zweidimensional über ein Pulverbett abgelenkt werden. Allein der höhergütige zweite Laserstrahl dient für die Feinbestrahlung, also für die Ausbildung eines Hülleabschnitts, während der niedergütige erste Laserstrahl für die Ausbildung eines Kernabschnitts genutzt wird.

US 2012/237745 A1 offenbart das vollflächige Vorheizen des Pulverbetts mittels eines CO₂-Laserstrahls 1 und das Verschmelzen des Pulvers mittels eines Nd:YAG-Laserstrahls, welcher mittels eines Scanners über das Pulverbett zweidimensional abgelenkt wird.

DE 198 18 469 A1 beschreibt das additive Fertigen eines Bauteils mittels eines dicken und eines dünnen Laserstrahls, wobei der dünne Laserstrahl einen Durchmesser von 0,01 bis 1,0 mm und eine geringe Leistung und der dicke Laserstrahl einen Durchmesser von 0,3 bis 50 mm und eine hohe Leistung aufweist.

DE 199 53 000 A1 beschreibt das additive Fertigen eines Bauteils mittels eines cw-Faserlaserstrahls für die Feinstruktur einer Hülle und mittels eines Diodenlaserstrahls für einen Kern des Bauteils. Der cw-Faserlaserstrahl 10 ist geringer fokussiert als der Diodenlaserstrahls und weist einen geringen Fokusdurchmesser als der Diodenlaserstrahl 8 auf.

WO 2015/191257 A1 offenbart die Parallelherstellung von identischen Bauteilen mittels mehrerer identischer Laserstrahlen, die entweder aus einem einzigen Laserstrahl durch Strahlteilung oder aus unterschiedlichen Laserstrahlen erzeugt und mittels eines einzigen Galvanometerspiegels an unterschiedliche Positionen auf ein Pulverbett gelenkt werden, um dort die identischen Bauteile herzustellen. Den einzelnen Laserstrahlen ist vom gemeinsamen Galvanometerspiegel jeweils ein eigener Unterbereich des gesamten Pulverbettbereichs zugeordnet.

WO 2016/077250 A1 und US 2013/112672 A1 beschreiben ebenfalls additive Verfahren zur Herstellung von Bauteilen mit mindestens zwei Laserstrahlen, wobei mehrere Bauteile von unterschiedlichen Laserstrahlen gefertigt werden.

Aus der DE 10 2013 103 006 A1 ist schließlich noch eine Maschine zur schichtweisen additiven Fertigung von Bauteilen mittels mehrerer Laserstrahlen bekannt. Die Maschine umfasst jeweils einen Scanner für jeden Laserstrahl zum Abtasten der jeweiligen Laserstrahlen über ein Pulverbett und einen schrittweise absenkbaren Träger zur Ermöglichung aufeinander folgender Fertigungsschichtzyklen und zur Aufnahme des Pulverbetts. Die Laserstrahlen sind identisch und können jeweils den gleichen Pulverbettbereich abtasten, so dass jeder Teil eines in diesem Pulverbettbereich herzustellenden Bauteils von jedem der Laserstrahlen gefertigt werden kann. Der auf das in der Brennebene befindliche Pulverbett projizierte Laserbrennfleck der Laserstrahlen hat einen Durchmesser von üblicherweise etwa 70µm. Durch die mehreren einander überlappenden Laserstrahlen wird ein größerer gemeinsamer Pulverbettbereich abgedeckt, so dass verschiedene Abschnitte eines einzelnen Bauteils gleichzeitig und aneinander angrenzend durch die Laserstrahlen hergestellt werden können. Wenn hierbei die Laserstrahlen nicht genau aufeinander kalibriert sind oder die Laserstrahlen über die Bauzeit unterschiedlichen Drifts unterliegen, führt dies bei einer von den Laserstrahlen gemeinsam hergestellten Oberflächenkontur zu einer Erhöhung der Oberflächenrauhigkeit, weil die Schmelzbahnen der Laserstrahlen um diese Ungenauigkeit zueinander versetzt sind.

Demgegenüber liegt der vorliegenden Erfindung die Aufgabe zugrunde, ein Verfahren der eingangs genannten Art dahingehend weiterzubilden, dass Bauteile ohne Versatz in der Oberflächenkontur, also mit einer über die gesamte Oberflächenkontur gleichbleibenden Genauigkeit, hergestellt werden können.

Diese Aufgabe wird erfindungsgemäß durch ein Verfahren mit den Merkmalen von Anspruch 1 gelöst Im Rahmen der Erfindung wird als "nahezu rechtwinklig zum Pulverbett" eine Oberflächenkontur verstanden, die mit der Normalen des Pulverbetts einen Winkel von kleiner als 20°, bevorzugt kleiner als 10°, einschließt, und als "nicht nahezu parallel zum Pulverbett" eine Oberflächenkontur verstanden, die mit der Normalen des Pulverbetts einen Winkel von kleiner als 70° einschließt.

Erfindungsgemäß wird jede einzelne Oberflächenkontur des Bauteils mit dem gleichen Laserstrahl über alle Schichten der Oberflächenkontur hinweg belichtet, so dass ein zwischen den unterschiedlichen Laserstrahlen vorhandener Kalibrier- oder Driftfehler unerheblich ist. Die Laserstrahlen sind aufgrund ihrer vergleichbar kleinen Laserbrennflecken alle geeignet, die Oberflächenkonturen mit der gleichen Oberflächenqualität herzustellen. Mit anderen Worten weisen die auf das Pulverbett projizierten Laserbrennflecken der Laserstrahlen innerhalb des Pulverbettbereichs jeweils eine nahezu identische Brennfleckgröße bzw. einen entlang dem Pulverbettbereich nahezu identischen bzw. symmetrischen Brennfleckgrößenverlauf auf. Im Rahmen der Erfindung wird unter der Größe des Laserbrennfleckens seine maximale Erstreckung verstanden, also im Falle eines kreisrunden Laserbrennfleckens der Durchmesser und im Falle eines elliptischen Laserbrennfleckens die Länge der Längsachse.

Dabei kann vorteilhaft auch mindestens eine sich über mehrere Schichten erstreckende, parallel zum Pulverbett ausgerichtete oder mit der Normalen des Pulverbetts einen Winkel von größer als 70° einschließende Oberflächenkontur des in dem Pulverbettbereich herzustellenden Bauteils mit dem gleichen Laserstrahl wie eine insbesondere daran angrenzende, rechtwinklig zum Pulverbett ausgerichtete oder mit der Normalen des Pulverbetts einen Winkel von kleiner als 20° einschließende Oberflächenkontur gefertigt werden. Im Rahmen der Erfindung wird als "nahezu parallel zum Pulverbett" eine Oberflächenkontur verstanden, die mit der Normalen des Pulverbetts einen Winkel von größer als 70°, bevorzugt größer als 80°, einschließt.

Ebenfalls vorteilhaft kann mindestens eine sich über mehrere Schichten erstreckende, parallel zum Pulverbett ausgerichtete oder mit der Normalen des Pulverbetts einen Winkel von größer als 70° einschließende Oberflächenkontur des in dem Pulverbettbereich herzustellenden Bauteils mit dem gleichen Laserstrahl wie eine insbesondere daran angrenzende, nicht parallel zum Pulverbett ausgerichtete Oberflächenkontur gefertigt werden.

Besonders bevorzugt werden alle sich über mehrere Schichten erstreckenden, rechtwinklig zum Pulverbett ausgerichteten oder mit der Normalen des Pulverbetts einen Winkel von kleiner als 20° einschließenden Oberflächenkonturen der Au-ßen- und/oder Innenoberfläche des in dem Pulverbettbereich herzustellenden Bauteils und/oder alle sich über mehrere Schichten erstreckenden, nicht parallel zum Pulverbett ausgerichteten Oberflächenkonturen des Bauteils ausschließlich von einem der Laserstrahlen gefertigt.

Ganz besonders bevorzugt werden alle sich über mehrere Schichten erstreckenden, rechtwinklig zum Pulverbett ausgerichteten oder mit der Normalen des Pulverbetts einen Winkel von kleiner als 20° einschließenden Oberflächenkonturen und auch alle übrigen nicht parallel zum Pulverbett ausgerichteten Oberflächenkonturen des in dem Pulverbettbereich herzustellenden Bauteils ausschließlich von einem der Laserstrahlen gefertigt.

Mehrere im Pulverbettbereich zu fertigende Bauteile können jeweils von unterschiedlichen Laserstrahlen zeitparallel gefertigt werden.

Vorzugsweise ist der von den Laserstrahlen abscannbare Pulverbettbereich durch mindestens ca. 2/3 des Pulverbetts, insbesondere durch das gesamte Pulverbett, gebildet.

Die Laserstrahlen können entweder von unterschiedlichen Laserquellen erzeugt werden oder von nur einer einzelnen Laserquelle, deren Laserstrahl dann über Strahlteiler in die einzelnen Laserstrahlen aufgeteilt wird.

Besonders vorteilhaft wird zeitparallel zur Fertigung der Oberflächenkontur ein innenliegender Bereich des Bauteils von einem anderen der Laserstrahlen gefertigt, was immer dann sinnvoll ist, wenn der andere Laserstrahl kein eigenes Bauteil zeitparallel fertigen kann. Die Belichtung der Oberflächenkontur und die Belichtung des innenliegenden Bereichs des Bauteils, insbesondere durch den anderen Laserstrahl, werden dabei bevorzugt miteinander überlappend ausgeführt und zwar mindestens in der Größenordnung der Kalibrierfehler oder Drifts zwischen den Laserstrahlen.

Die Erfindung betrifft auch ein Computerprogrammprodukt, welches Codemittel aufweist, die zum Durchführen aller Schritte des oben beschriebenen Verfahrens angepasst sind, wenn das Programm auf einer Maschinensteuerung einer Maschine abläuft.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch eine LMF-Maschine zur schichtweisen additiven Fertigung von Bauteilen;
- Fig. 2: eine Schnittansicht durch die in Fig. 1 gezeigte LMF-Maschine gemäß II-II in Fig. 1; und
- Fig. 3: eine modifizierte LMF-Maschine zur schichtweisen additiven Fertigung von Bauteilen in einer Schnittansicht analog zu Fig. 2.

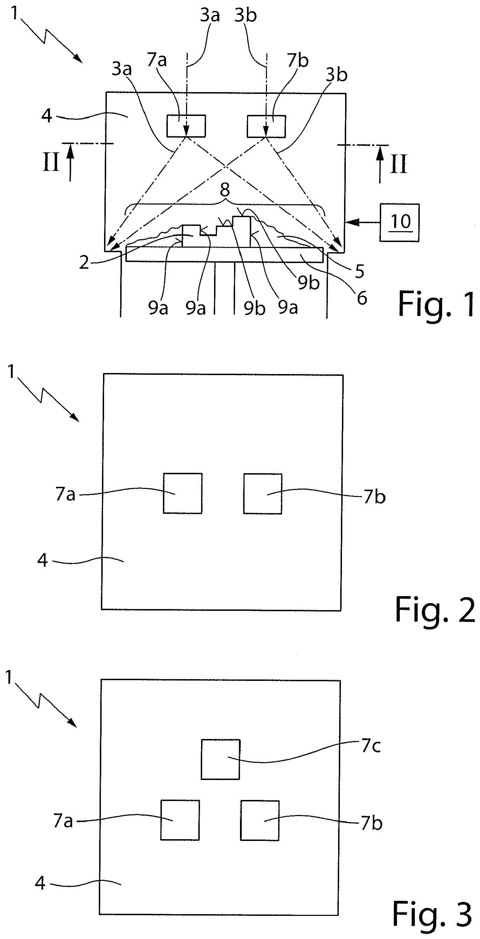

Die in **Fig. 1** gezeigte LMF-Maschine **1** dient zur schichtweisen additiven Fertigung von Bauteilen **2** mittels zweier Laserstrahlen **3a**, **3b** und umfasst eine Prozesskammer **4,** in der eine Pulverschicht (Metall, Keramik, Thermoplaste) in Form eines Pulverbetts **5** auf eine Substratplatte **6** aufgebracht und mit den Laserstrahlen 3a, 3b geschmolzen und dadurch verfestigt werden kann. Anschließend wird die Substratplatte 6 um eine Pulverschichtdicke abgesenkt und eine neue Pulverschicht aufgebracht und erneut verfestigt, bis ein 3-dimensionales Bauteil 2 gefertigt wurde.

Oberhalb des Pulverbetts 5 sind ein erster Scanner **7a** zum zweidimensionalen Ablenken des einen Laserstrahls 3a über einen ersten Pulverbettabschnitt und ein zweiter Scanner **7b** zum zweidimensionalen Ablenken des anderen, zweiten Laserstrahls 3b über einen zweiten Pulverbettabschnitt angeordnet, wobei sich die beiden Pulverbettabschnitte überlappen. Wie in Fig. 1 strichpunktiert angedeutet, kann im gezeigten Ausführungsbeispiel von beiden Laserstrahlen 3a, 3b jeweils das gesamte Pulverbett 5, insbesondere oberhalb der Substratplatte 6, abgescannt werden, so dass hier der von beiden Laserstrahlen 3a, 3b abscannbare Pulverbettbereich **8** durch das gesamte Pulverbett 5 gebildet ist.

Die auf das Pulverbett 5 projizierten Laserbrennflecken der Laserstrahlen 3a, 3b sind jeweils auf eine Größe kleiner oder gleich 300µm, bevorzugt 200µm, besonders bevorzugt 100µm, eingestellt.

Die Form und Größe der Laserbrennflecken sind über das Pulverbett 5 im Wesentlichen, aber nicht genau konstant. Wird der Laserstrahl 3a, 3b auf dem Pulverbett 5 von einem Auftreffpunkt direkt unterhalb seines Scanners 7a, 7b wegbewegt, verändert er sich in Form und Größe, wird oval und dehnt sich in der Größe aus, wodurch die Leistungsdichte verringert wird. Aufgrund ihrer geringen Laserbrennfleckgrößen sind beide Laserstrahlen 3a, 3b gleichermaßen geeignet, ein Bauteil 2 mit der gleichen Oberflächenrauhigkeit (Oberflächenqualität) herzustellen. Die beiden Laserstrahlen 3a, 3b weisen jeweils eine innerhalb des Pulverbettbereichs 8 identische Brennfleckgröße bzw. einen entlang dem Pulverbettbereich 8 identischen oder symmetrischen Brennfleckgrößenverlauf auf.

Im Gegensatz zu bisher bekannten Fertigungsverfahren, bei denen - nach Kalibrierung der beiden Laserstrahlen 3a, 3b in sich und aufeinander - eine sich über mehrere Schichten erstreckende, rechtwinklig oder nahezu rechtwinklig zum Pulverbett 5 ausgerichtete Oberflächenkontur **9a** eines Bauteils 2 von beiden Laserstrahlen 3a, 3b gemeinsam gefertigt wird und sich daher bei Kalibrierfehlern oder Drifts der Laserstrahlen die Oberflächenrauhigkeit des Bauteils erhöht, wird erfindungsgemäß jede einzelne, sich über mehrere Schichten erstreckende, rechtwinklig oder nahezu rechtwinklig zum Pulverbett 5 ausgerichtete Oberflächenkontur 9a ausschließlich von einem der beiden Laserstrahlen 3a, 3b gefertigt. Bevorzugt werden alle sich über mehrere Schichten erstreckenden, rechtwinklig oder nahezu rechtwinklig zum Pulverbett ausgerichteten Oberflächenkonturen der Außen- und/oder Innenoberfläche des Bauteils 2 ausschließlich von einem der Laserstrahlen 3a, 3b gefertigt. Dies resultiert in einer auf der Oberflächenkontur 9a gleichbleibenden Oberflächenrauhigkeit und insbesondere in einer besseren Maßhaltigkeit auf Grund einer genaueren Positionierung der Oberflächenkonturen 9a zueinander, falls alle rechtwinklig oder nahezu rechtwinklig zum Pulverbett ausgerichteten Oberflächenkonturen 9a eines Bauteils 2 ausschließlich von einem der beiden Laserstrahlen 3a, 3b gefertigt werden. Vorteilhaft können alle rechtwinklig oder nahezu rechtwinklig zum Pulverbett 5 ausgerichteten Oberflächenkonturen 9a und auch alle übrigen, also nicht rechtwinklig oder nicht nahezu rechtwinklig zum Pulverbett 5 ausgerichteten Oberflächenkonturen **9b** des in dem Pulverbettbereich 8 herzustellenden Bauteils 2 ausschließlich von einem der Laserstrahlen 3a, 3b gefertigt werden.

Zeitparallel zur Fertigung der rechtwinklig oder nahezu rechtwinklig zum Pulverbett 5 ausgerichteten Oberflächenkontur 9a des Bauteils 2 durch den einen Laserstrahl kann ein innenliegender Bereich dieses Bauteils 2 von dem anderen Laserstrahl gefertigt werden. Mehrere im selben Pulverbett 5, insbesondere im Pulverbettbereich 8, zu fertigende Bauteile können von den beiden Laserstrahlen 3a, 3b zeitparallel und unabhängig voneinander gefertigt werden. Die Belichtung der rechtwinklig oder nahezu rechtwinklig zum Pulverbett 5 ausgerichteten Oberflächenkontur 9a und die Belichtung des innenliegenden Bereichs des Bauteils 2, insbesondere durch den anderen Laserstrahl, werden dabei bevorzugt miteinander überlappend ausgeführt und zwar mindestens in der Größenordnung der Kalibrierfehler oder Drifts zwischen den Laserstrahlen.

Wie in Fig. 1 gezeigt, umfasst die Maschine 1 ferner eine Maschinensteuerung **10,** die programmiert ist, das oben beschriebene Verfahren zum schichtweisen additiven Fertigen von Bauteilen zu steuern.

Wie oben bereits ausgeführt, kann ein Bauteil 2 mehrere rechtwinklig oder nahezu rechtwinklig zum Pulverbett 5 ausgerichtete Oberflächenkonturen 9a aufweisen, wie an den folgenden Beispielen verdeutlicht wird:
1. Eine Kugel, die innen hohl ist, weist mit der äußeren Kugeloberfläche eine Oberflächenkontur 9a und mit der inneren Kugeloberfläche eine weitere Oberflächenkontur 9a auf.
2. Ein senkrecht im Pulverbett aufgebautes Rohr weist ebenfalls zwei Oberflächenkonturen 9a auf, und zwar eine rechtwinklig zum Pulverbett 5 ausgerichtete Oberflächenkontur, die die Außenseite des Rohrs darstellt, und eine weitere rechtwinklig zum Pulverbett 5 ausgerichtete Oberflächenkontur, die die Innenseite des Rohrs darstellt, wobei Außen- und Innenseite über einen innenliegenden Bereich des Bauteils verbunden sind. D.h. insbesondere, dass im Wesentlichen parallel zum Pulverbett ausgerichtete Flächen, in diesem Beispiel Rohrendflächen, nicht als Oberflächenkonturen im Sinne dieser Erfindung angesehen werden, die ausschließlich von einem der Laser gefertigt werden müssen, um eine Oberflächenrauhigkeit durch Kalibrierfehler oder Drifts zwischen den Laserstrahlen zu vermindern. In diesem Fall wird die Belichtung der rechtwinklig zum Pulverbett ausgerichteten Oberflächenkonturen 9a und die Belichtung des innenliegenden, parallel zum Pulverbett ausgerichteten Bereichs 9b des Bauteils 2, insbesondere wenn diese durch verschiedene Laserstrahlen ausgeführt werden, bevorzugt miteinander überlappend ausgeführt und zwar mindestens in der Größenordnung der Kalibrierfehler oder Drifts zwischen den beteiligten Laserstrahlen. Es ist jedoch optional möglich, alle rechtwinklig oder nahezu rechtwinklig zum Pulverbett 5 ausgerichteten Oberflächenkonturen 9a und alle übrigen, also nicht rechtwinklig oder nicht nahezu rechtwinklig zum Pulverbett ausgerichteten Oberflächenkonturen 9b des in dem Pulverbettbereich 8 herzustellenden Bauteils 2 ausschließlich von einem der Laserstrahlen 3a, 3b zu fertigen. In diesem Falle kann auf einfachere Art und Weise eine bessere Oberflächenqualität auch bei Flächen, die im Wesentlichen parallel zum Pulverbett ausgerichtet sind, erreicht werden.

Statt der in Fig. 1 gezeigten zwei Laserstrahlen 3a, 3b kann die Maschine 1 auch drei oder mehr Laserstrahlen aufweisen, die einen gleichen Pulverbettbereich abscannen. In **Fig. 3** ist eine Maschine 1 mit drei Scannern 7a, 7b, **7c** zum zweidimensionalen Ablenken von drei Laserstrahlen gezeigt, wobei die drei Scanner 7a-7c an den Eckpunkten eines regelmäßigen Dreiecks oberhalb der Mitte des Pulverbetts 5 angeordnet sind.

## Patentansprüche

1. Laser Metal Fusion- oder Selective Laser Sintering-Verfahren zum schichtweisen additiven Fertigen von Bauteilen (2) in einem Pulverbett (5) mittels mindestens zweier jeweils mittels eines eigenen Scanners (7a, 7b) über den gleichen Pulverbettbereich (8) zweidimensional ablenkbarer Laserstrahlen (3a, 3b), deren direkt unterhalb ihres jeweiligen Scanners (7a, 7b) auf das Pulverbett (5) projizierte Laserbrennflecken jeweils auf einen Durchmesser kleiner oder gleich 300µm, bevorzugt 200µm, besonders bevorzugt 100µm, eingestellt sind, wobei ein in dem Pulverbettbereich (8) herzustellendes Bauteil (2) von jedem der Laserstrahlen (3a, 3b) gefertigt werden kann,
wobei die direkt unterhalb ihres jeweiligen Scanners (7a, 7b) auf das Pulverbett (5) projizierten Laserbrennflecken der Laserstrahlen (3a, 3b) den gleichen Durchmesser aufweisen, so dass die Laserstrahlen (3a, 3b) gleichermaßen geeignet sind, ein Bauteil (2) mit der gleichen Oberflächenrauhigkeit herzustellen,
**dadurch gekennzeichnet,**
**dass** jede einzelne, sich über mehrere Schichten erstreckende, rechtwinklig zum Pulverbett (5) ausgerichtete oder mit der Normalen des Pulverbetts (5) einen Winkel von kleiner als 20° einschließende Oberflächenkontur (9a) des im Pulverbettbereich (8) herzustellenden Bauteils (2) und/oder jede einzelne, sich über mehrere Schichten erstreckende, nicht parallel zum Pulverbett (5) ausgerichtete Oberflächenkontur (9a) des im Pulverbettbereich (8) herzustellenden Bauteils (2) ausschließlich von einem der Laserstrahlen (3a, 3b) gefertigt wird.

2. Verfahren nach Anspruch 1, **dadurch gekennzeichnet, dass** mindestens eine sich über mehrere Schichten erstreckende, parallel zum Pulverbett (5) ausgerichtete oder mit der Normalen des Pulverbetts (5) einen Winkel von größer als 70° einschließende Oberflächenkontur (9b) des in dem Pulverbettbereich (8) herzustellenden Bauteils (2) mit dem gleichen Laserstrahl (3a, 3b) wie eine insbesondere daran angrenzende, rechtwinklig zum Pulverbett (5) ausgerichtete oder mit der Normalen des Pulverbetts (5) einen Winkel von kleiner als 20° einschließende Oberflächenkontur (9a) gefertigt wird.

3. Verfahren nach Anspruch 1 oder 2, **dadurch gekennzeichnet, dass** mindestens eine sich über mehrere Schichten erstreckende, parallel zum Pulverbett (5) ausgerichtete oder mit der Normalen des Pulverbetts (5) einen Winkel von größer als 70° einschließende Oberflächenkontur (9b) des in dem Pulverbettbereich (8) herzustellenden Bauteils (2) mit dem gleichen Laserstrahl (3a, 3b) wie eine insbesondere daran angrenzende, nicht parallel zum Pulverbett (5) ausgerichtete Oberflächenkontur gefertigt wird.

4. Verfahren nach einem der vorhergehenden Ansprüche, **dadurch gekennzeichnet, dass** alle sich über mehrere Schichten erstreckenden, rechtwinklig zum Pulverbett (5) ausgerichteten oder mit der Normalen des Pulverbetts (5) einen Winkel von kleiner als 20° einschließenden Oberflächenkonturen (9a) der Außen- und/oder Innenoberfläche des in dem Pulverbettbereich (8) herzustellenden Bauteils (2) ausschließlich von einem der Laserstrahlen (3a, 3b) gefertigt werden.

5. Verfahren nach einem der vorhergehenden Ansprüche, **dadurch gekennzeichnet, dass** alle sich über mehrere Schichten erstreckenden, nicht parallel zum Pulverbett (5) ausgerichteten Oberflächenkonturen des in dem Pulverbettbereich (8) herzustellenden Bauteils (2) ausschließlich von einem der Laserstrahlen (3a, 3b) gefertigt werden.

6. Verfahren nach einem der vorhergehenden Ansprüche, **dadurch gekennzeichnet, dass** alle sich über mehrere Schichten erstreckenden, rechtwinklig zum Pulverbett (5) ausgerichteten oder mit der Normalen des Pulverbetts (5) einen Winkel von kleiner als 20° einschließenden Oberflächenkonturen (9a) und auch alle übrigen, nicht parallel zum Pulverbett (5) ausgerichteten Oberflächenkonturen des in dem Pulverbettbereich (8) herzustellenden Bauteils (2) ausschließlich von einem der Laserstrahlen (3a, 3b) gefertigt werden.

7. Verfahren nach einem der vorhergehenden Ansprüche, **dadurch gekennzeichnet, dass** mehrere im Pulverbettbereich (8) zu fertigende Bauteile jeweils von unterschiedlichen Laserstrahlen (3a, 3b) zeitparallel gefertigt werden.

8. Verfahren nach einem der vorhergehenden Ansprüche, **dadurch gekennzeichnet, dass** der von den Laserstrahlen (3a, 3b) abscannbare Pulverbettbereich (8) durch mindestens ca. 2/3 des Pulverbetts (5), insbesondere durch das gesamte Pulverbett (5), gebildet ist.

9. Verfahren nach einem der vorgehenden Ansprüche, **dadurch gekennzeichnet, dass** zeitparallel zur Fertigung der Oberflächenkontur (9) ein innenliegender Bereich des Bauteils (2) von einem anderen der Laserstrahlen 3a, 3b) gefertigt wird, wobei die Laserstrahlen (3a, 3b) miteinander mindestens in der Größenordnung der Kalibierfehler oder Drifts überlappen.

10. Computerprogrammprodukt, welches Codemittel aufweist, die zum Durchführen aller Schritte des Verfahrens nach einem der Ansprüche 1 bis 9 angepasst sind, wenn das Programm auf einer Maschinensteuerung (10) einer Laser Metal Fusion- oder Selective Laser Sintering-Maschine (1) abläuft.

## Claims

1. A laser metal fusion or selective laser sintering method for the additive manufacture of components (2) in layers in a powder bed (5) by means of at least two laser beams (3a, 3b) which can be deflected two-dimensionally over the same powder bed region (8) by means of a separate scanner each (7a, 7b) and each laser burn spot of which projected onto the power bed (5) directly below the respective scanner (7a, 7b) is set to a diameter of a size of less than or equal to 300 µm, preferably 200 µm, particularly preferably 100 µm, wherein a component (2) to be produced in the powder bed region (8) can be manufactured by each of the laser beams (3a, 3b),
wherein the laser burn spots of the laser beams (3a, 3b) projected directly below their respective scanners (7a, 7b) have the same diameter such that the laser beams (3a, 3b) are equally suited to produce a component (2) with the same surface roughness,
**characterized in that**
each individual surface contour (9a) of the component (2) to be produced in the powder bed region (8), said contour extending over multiple layers and being oriented perpendicularly to the powder bed (5) or enclosing an angle of less than 20° with the normal of the powder bed (5), and/or each individual surface contour (9a) of the component (2) to be produced in the powder bed region (8), said contour extending over multiple layers and not being oriented parallel to the powder bed (5), is manufactured solely by one of the laser beams (3a, 3b).

2. The method as claimed in claim 1, **characterized in that** at least one surface contour (9b) of the component (2) to be produced in the powder bed region (8), said contour extending over multiple layers and being oriented parallel to the powder bed (5) or enclosing an angle of more than 70° with the normal of the powder bed (5), is manufactured with the same laser beam (3a, 3b) as a surface contour (9a) in particular arranged adjacent thereto and oriented perpendicularly to the powder bed (5) or enclosing an angle of less than 20° with the normal of the powder bed (5).

3. The method as claimed in claim 1 or 2, **characterized in that** at least one surface contour (9b) of the component (2) to be produced in the powder bed region (8), said contour extending over multiple layers and being oriented parallel to the powder bed (5) or enclosing an angle of more than 70° with the normal of the powder bed (5), is manufactured with the same laser beam (3a, 3b) as a surface contour in particular arranged adjacent thereto and not oriented parallel to the powder bed (5).

4. The method as claimed in one of the preceding claims, **characterized in that** all the surface contours (9a) of the outer and/or inner surface of the component (2) to be produced in the powder bed region (8), said contours extending over multiple layers and being oriented perpendicularly to the powder bed (5) or enclosing an angle of less than 20° with the normal of the powder bed (5), are manufactured solely by one of the laser beams (3a, 3b).

5. The method as claimed in one of the preceding claims, **characterized in that** all the surface contours of the component (2) to be produced in the powder bed region (8), said contours extending over multiple layers and not being oriented parallel to the powder bed (5), are manufactured solely by one of the laser beams (3a, 3b).

6. The method as claimed in one of the preceding claims, **characterized in that** all the surface contours (9a), said contours extending over multiple layers and being oriented perpendicularly to the powder bed (5) or enclosing an angle of less than 20° with the normal of the powder bed (5), and also all other surface contours of the component (2) to be produced in the powder bed region (8) not being oriented parallel to the powder bed (5), are manufactured solely by one of the laser beams (3a, 3b).

7. The method as claimed in one of the preceding claims, **characterized in that** multiple components to be manufactured in the powder bed region (8) are each manufactured simultaneously by different laser beams (3a, 3b).

8. The method as claimed in one of the preceding claims, **characterized in that** the powder bed region (8) that can be scanned by the laser beams (3a, 3b) is formed by at least about 2/3 of the powder bed (5), in particular by the entire powder bed (5).

9. The method as claimed in one of the preceding claims, **characterized in that** simultaneously with the manufacture of the surface contour (9), an internal region of the component (2) is manufactured by another of the laser beams (3a, 3b), wherein the laser beams (3a, 3b) overlap one another at least in the order of magnitude of the calibration errors or drifts.

10. A computer program product which has code means which are adapted to perform all the steps of the method as claimed in one of claims 1 to 9 when the program is run on a machine control system (10) of a laser metal fusion or selective laser sintering machine (1).

## Revendications

1. Procédé de fusion de métal par laser ou de frittage sélectif par laser pour la production additive couche par couche de composants (2) dans un lit de poudre (5) au moyen d'au moins deux faisceaux laser (3a, 3b) qui peuvent chacun être déviés dans deux dimensions sur la même zone de lit de poudre (8) au moyen d'un scanner propre (7a, 7b) et dont les foyers laser projetés sur le lit de poudre (5) directement au-dessous de leur scanner respectif (7a, 7b) sont chacun réglés à un diamètre inférieur ou égal à 300 µm, de préférence 200 µm, de manière particulièrement préférée 100 µm, un composant (2) à produire dans la zone de lit de poudre (8) pouvant être produit par chacun des faisceaux laser (3a, 3b), les foyers laser des faisceaux laser (3a, 3b) projetés sur le lit de poudre (5) directement au-dessous de leur scanner respectif (7a, 7b) ayant le même diamètre de sorte que les faisceaux laser (3a, 3b) sont appropriés d'égale manière pour produire un composant (2) avec la même rugosité de surface,
**caractérisé en ce que**
chaque contour de surface individuel (9a) du composant (2) à produire dans la zone de lit de poudre (8), lequel contour s'étend sur plusieurs couches, est orienté perpendiculairement au lit de poudre (5) ou forme avec la normale au lit de poudre (5) un angle de moins de 20°, et/ou chaque contour de surface individuel (9a) du composant (2) à produire dans la zone de lit de poudre (8), lequel contour s'étend sur plusieurs couches et n'est pas orienté parallèlement au lit de poudre (5), est produit exclusivement par l'un des faisceaux laser (3a, 3b) .

2. Procédé selon la revendication 1, **caractérisé en ce qu'**au moins un contour de surface (9b) du composant (2) à produire dans la zone de lit de poudre (8), lequel contour s'étend sur plusieurs couches, est orienté parallèlement au lit de poudre (5) ou forme avec la normale au lit de poudre (5) un angle de plus de 70°, est produit avec le même faisceau laser (3a, 3b) qu'un contour de surface (9a) qui est notamment adjacent, qui est orienté perpendiculairement au lit de poudre (5) ou qui forme avec la normale au lit de poudre (5) un angle de moins de 20°.

3. Procédé selon la revendication 1 ou 2, **caractérisé en ce qu'**au moins un contour de surface (9b) du composant (2) à produire dans la zone de lit de poudre (8), lequel contour s'étend sur plusieurs couches, est orienté parallèlement au lit de poudre (5) ou forme avec la normale au lit de poudre (5) un angle de plus de 70°, est produit avec le même faisceau laser (3a, 3b) qu'un contour de surface qui est notamment adjacent, qui n'est pas orienté parallèlement au lit de poudre (5).

4. Procédé selon l'une des revendications précédentes, **caractérisé en ce que** tous les contours de surface (9a) de la surface extérieure et/ou intérieure du composant (2) à produire dans la zone de lit de poudre (8), lesquels contours s'étendent sur plusieurs couches, sont orientés perpendiculairement au lit de poudre (5) ou forment avec la normale au lit de poudre (5) un angle de moins de 20°, sont produits exclusivement par l'un des faisceaux laser (3a, 3b).

5. Procédé selon l'une des revendications précédentes, **caractérisé en ce que** tous les contours de surface du composant (2) à produire dans la zone de lit de poudre (8), lesquels contours s'étendent sur plusieurs couches et ne sont pas orientés parallèlement au lit de poudre (5), sont produits exclusivement par l'un des faisceaux laser (3a, 3b).

6. Procédé selon l'une des revendications précédentes, **caractérisé en ce que** tous les contours de surface (9a), qui s'étendent sur plusieurs couches, sont orientés perpendiculairement au lit de poudre (5) ou forment avec la normale au lit de poudre (5) un angle de moins de 20°, et également tous les contours de surface restants du composant (2) à produire dans la zone de lit de poudre (8), lesquels contours restants ne sont pas orientés parallèlement au lit de poudre (5), sont produits exclusivement par l'un des faisceaux laser (3a, 3b).

7. Procédé selon l'une des revendications précédentes, **caractérisé en ce que** plusieurs composants à produire dans la zone de lit de poudre (8) sont produits simultanément respectivement par différents faisceaux laser (3a, 3b).

8. Procédé selon l'une des revendications précédentes, **caractérisé en ce que** la zone de lit de poudre (8), pouvant être balayée par les faisceaux laser (3a, 3b), est formée par au moins 2/3 environ du lit de poudre (5), notamment par tout le lit de poudre (5).

9. Procédé selon l'une des revendications précédentes, **caractérisé en ce que** parallèlement à la production du contour de surface (9), une zone intérieure du composant (2) est réalisée par un autre des faisceaux laser (3a, 3b), les faisceaux laser (3a, 3b) se chevauchant au moins dans l'ordre de grandeur des erreurs d'étalonnage ou dérives.

10. Progiciel qui comporte des moyens de codage adaptés pour réaliser toutes les étapes du procédé selon l'une des revendications 1 à 9 lorsque le progiciel est exécuté sur une commande (10) d'une machine de fusion de métal par laser ou de frittage sélectif par laser (1).
